# EUROPÄISCHE PATENTSCHRIFT

(11) **EP 0 294 764 B1**
(45) Veröffentlichungstag und Bekanntmachung des Hinweises auf die Patenterteilung: **10.11.1993**
(21) Anmeldenummer: 88109062.5
(22) Anmeldetag: 07.06.1988
(51) Int. Cl.: G02B 6/38

(54) **Lichtwellenleitersteckverbindungen**
Optical waveguide connections
Connections pour guide d'ondes

(30) Priorität: 10.06.1987 DE 3719361
(43) Veröffentlichungstag der Anmeldung: 14.12.1988
(73) Patentinhaber: SIEMENS AKTIENGESELLSCHAFT, 80333 München (DE)
(72) Erfinder: Klinger, Michael, D-8000 München 90 (DE)

(56) Entgegenhaltungen:
- EP-A- 0 064 749
- FR-A- 2 571 505
- GB-A- 2 176 629
- US-A- 4 140 365

## Beschreibung

Eine Koppelbuchse für Lichtwellenleitersteckverbindungen ist z. B. aus der FR-A-2 571 505 bekannt. In die Längsbohrung dieser Koppelbuchse können von beiden Seiten der Buchse her Steckerstifte eingesteckt werden, die konzentrisch zu ihrem zylindrischen Mantel mit einer Durchgangsbohrung versehen sind, in der jeweils eine lichtleitende Faser fixiert ist. Dadurch, daß die Längsbohrung der Koppelbuchse spielfrei dem Außendurchmesser der Steckerstifte angepaßt ist, werden die Faserendabschnitte in den stiftförmigen Steckerteilen aufeinander automatisch zwangsjustiert, wenn jeder Faserendababschnitt zuvor in seinem Steckerstift genau konzentrisch zum Mantel des Steckerstiftes fixiert worden ist. Die Steckerstifte werden häufig durch Überwurfmuttern, die an jedem Steckerstift unverlierbar gelagert sind und mit einem Außengewinde der Koppelbuchse zusammenarbeiten, an der Buchse gehalten. Löst man die Koppelbuchse in zwei ineinandergesteckte Hülsen auf, von denen die innere Hülse (Führungshülse) die Aufgabe übernimmt, zwei Steckerstifte konzentrisch zusammenzuführen und die äußere Hülse (Aufnahmehülse) vor allem dazu dient, die innere Hülse zu halten, so kann man die innere Hülse vorteilhaft aus einem besonders harten Werkstoff, wie z. B. Hartmetall, herstellen, wodurch eine auch gegenüber häufigen Steck- und Ziehvorgängen widerstandsfähige und formstabile Hülse erhalten werden kann, während die Aufnahmehülse aus einem relativ weichen, leicht bearbeitbaren Material bestehen kann, in das z. B. unschwierig Außengewinde eingeschnitten werden können.

Hierbei stellt sich jedoch das Problem, eine Führungshülse betriebssicher in einer Aufnahmehülse zu befestigen, wobei das Einsetzen der Führungshülse in die Aufnahmehülse möglichst unkompliziert möglich sein soll.

Aufgabe vorliegender Erfindung ist es daher, eine Koppelbuchse der eingangs genannten Art so auszubilden, daß die Führungshülse in einem möglichst einfachen Arbeitsgang in die Aufnahmehülse eingesetzt werden kann, ohne daß dadurch die Haltefunktion der Aufnahmehülse bezüglich der Führungshülse beeinträchtigt wird.

Diese Aufgabe wird durch die im Kennzeichrenden Teil des Anspruchs genannten Merkmale gelöst

Daß die Aufnahmehülse durch die Aufteilung der Koppelbuchse in zwei Hülsen aus einem relativ weichen, elastischen Material hergestellt werden kann, wird vorteilhaft ausgenutzt, um die Aufnahmehülse an einem Ende beim Einschieben der Führungshülse elastisch aufzuweiten und dadurch das Einschieben der Führungshülse in den Aufnahmeraum der Aufnahmehülse zu ermöglichen. Sobald die Führungshülse im Aufnahmeraum sitzt, nimmt die Aufnahmehülse wieder ihre ursprüngliche Form an und hält dadurch die Führungshülse nach Art eines snap-in Effektes im Aufnahmeraum fest.

Je nach Bemessung des Durchmessers des Aufnahmeraumes kann die Führungshülse in der Aufnahmehülse entweder unbeweglich (in diesem Fall stimmt der Außendurchmesser der Führungshülse ziemlich genau mit dem Durchmesser des Aufnahmeraumes überein) oder "schwimmend" gelagert werden, wenn der Außendurchmesser der Führungshülse kleiner bemessen wird als der Durchmesser des Aufnahmeraumes.

Eine solche "schwimmende" Lagerung der Führungshülse ist besonders dann vorteilhaft, wenn die Aufnahmehülse z. B. bei einer Einschubsteckverbindung starr an der Gehäusewand eines Gestelles fixiert ist und einer der beiden Steckerstifte an einem Einschub dieses Gestelles sitzt. Selbst bei einer querverschieblichen Lagerung, entweder der Koppelbuchse oder des Einschub-Steckerstiftes, kann es dabei nämlich beim Eindringen des Stiftes in die Führungshülse der Koppelbuchse zu einer Verklemmung des Stiftes in der Hülse infolge der engen Passung zwischen Hülsenbohrung und Stiftdurchmesser kommen. Eine "schwimmende" Lagerung der Führungshülse in der Aufnahmehülse ermöglicht es jedoch der Führungshülse, geringe Taumelbewegungen innerhalb der Aufnahmehülse auszuführen und sich dadurch besser einem eindringenden Stift anzupassen.

Ein Ausführungsbeispiel der Erfindung wird nachfolgend anhand von zwei FIG noch näher erläutert. Dabei zeigen, jeweils in Seitenansicht, geschnitten, und mehr oder weniger stark vergrößert,

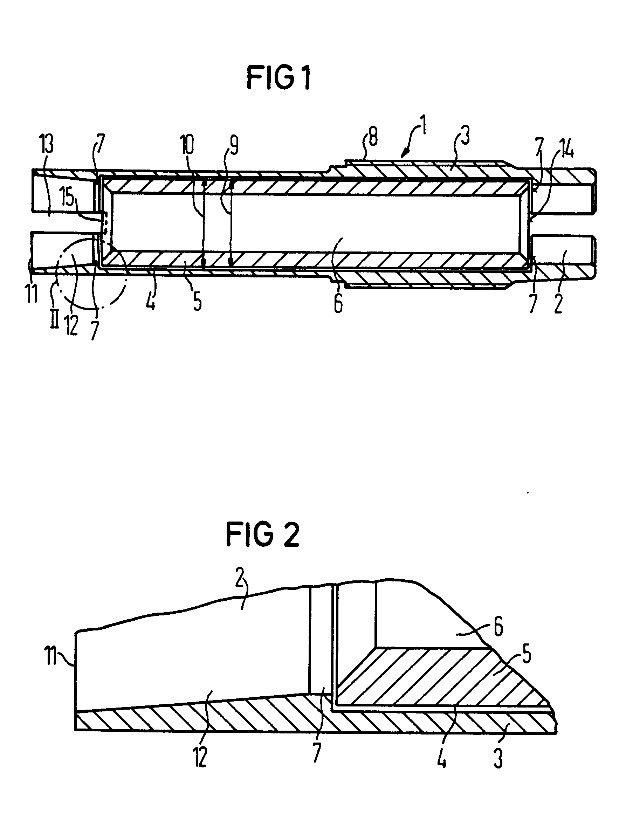

FIG 1 die Koppelbuchse mit Führungs- und Aufnahmehülse und
FIG 2 eine wesentliche Einzelheit der in FIG 1 dargestellten Koppelbuchse.

Im einzelnen ist den FIG zu entnehmen, daß die Koppelbuchse 1 aus einer mit einer Längsbohrung 2 versehenen, z. B. aus Neusilber bestehenden Aufnahmehülse 3 und einer Führungshülse 5 besteht, die in einem im Zuge der Längsbohrung 2 vorgesehenen Aufnahmeraum 4 angeordnet ist. Die Führungshülse 5 besteht vorzugsweise aus einem relativ harten, schwer zu bearbeitenden Material, wie z. B. Hartmetall.

Die Führungshülse 5 weist eine zur Längsbohrung 2 der Aufnahmehülse konzentrische Durchgangsbohrung 6 auf, die mit höchster Präzision hergestellt worden ist und genau mit dem Außendurchmesser von nicht dargestellten Steckerstiften übereinstimmt, so daß diese spielfrei in die Bohrung 6 der Führungshülse 5 eingesteckt werden können.

In Längsrichtung der Aufnahmehülse 3 verhindern jeweils stufenartige Verminderungen 7 des Bohrungsquerschnittes der Aufnahmehülse, daß die Führungshülse 5 aus dem Aufnahmeraum 4 herausgleiten kann. Außerdem ist die Aufnahmehülse 3 in einem mittleren Abschnitt mit einem Außengewinde 8 versehen, mit dem die Hülse z. B. in die mit einem Innengewinde versehene Bohrung einer Gehäusewand eingeschraubt werden kann.

Der Außendurchmesser der Führungshülse 5 ist geringer bemessen als der Durchmesser 10 des Aufnahmeraumes 4. Infolgedessen kann die Führungshülse 5 im Aufnahmeraum 4 geringfügig Taumelbewegungen ausführen, d. h. sich mit ihrer Achse zur Achse der Aufnahmehülse geringfügig schräg stellen, wodurch das Einführen eines Steckerstiftes in die Bohrung 6 der Führungshülse 5 wesentlich erleichtert wird.

Die an beiden Enden über die Führungshülse 5 hinausragende Aufnahmehülse 3 ist an einem Ende 11 mit einem Bohrungsabschnitt 12 versehen, der am Ende 11 einen größeren Durchmesser hat, als der Außendurchmesser 9 der Führungshülse 5. Der Bohrungsabschnitt 12 verjüngt sich zum Aufnahmeraum 4 hin konisch auf einen Durchmesser, der kleiner ist als der Außendurchmesser 9 der Führungshülse. Außerdem ist die Aufnahmehülse 3 am Ende 11 mit Längsschlitzen 13 versehen, die bis in den Aufnahmeraum 4 hineinreichen und dadurch die Hülse 3 im Bereich des Bohrungsabschnittes 12 einschließlich der stufenartigen Durchmesserverminderung 7, in welche der Bohrungsabschnitt 12 übergeht, elastisch aufweitbar machen.

Somit kann die Führungshülse 5 mit ihrem vom Ende 11 abgewandten Ende 14 voran in den Bohrungsabschnitt 12 eingeschoben werden, wobei der Abschnitt 12 durch das Einschieben der Führungshülse 5 in diesen Abschnitt mehr und mehr aufgeweitet wird. Sobald die Führungshülse 5 im Aufnahmeraum 4 sitzt, schnappt die stufenartige Durchmesserverminderung 7 hinter dem Ende 15 der Führungshülse ein, wodurch die Führungshülse 5 im Aufnahmeraum 4 verriegelt wird.

## Patentansprüche

1. Koppelbuchse für Lichtwellenleitersteckverbindungen mit einer rohrförmigen Aufnahmeeinrichtung, die eine Längsbohrung und einen im Zuge der Längsbohrung vorgesehenen zylindrischen Aufnahmeraum aufweist, sowie mit einer im Aufnahmeraum angeordneten Führungshülse (5), und mit einem an beiden Enden des Aufnahmeraumes stufenartig unter den Außendurchmesser der Führungshülse (5) verminderten Bohrungsprofil der Längsbohrung, wobei wenigstens an einem Ende (11) der Aufnahmeeinrichtung (3) ein zum Aufnahmeraum (4) hin sich konisch verjüngender Abschnitt (12) der Längsbohrung (2) vorgesehen ist, dessen Durchmesser am Hülsenende (11) größer als der Außendurchmesser (9) der Führungshülse (5) ist und der an seinem anderen Ende einen mit dem stufenartig verminderten Bohrungsprofil (7) übereinstimmenden Durchmesser aufweist,
**dadurch gekennzeichnet,**
daß die Aufnahmeeinrichtung durch eine an beiden Enden über die Führungshülse (5) hinausragende einteilige Aufnahmehülse (3) gebildet ist und daß die Aufnahmehülse (3) an dem genannten wenigstens einen Ende (11) durch bis in den Aufnahmeraum (4) reichende Längsschlitze (13) elastisch aufweitbar ausgebildet ist.

## Claims

1. Coupling bush for optical waveguide plug connections having a tubular retaining device which has a longitudinal hole and a cylindrical retaining space which is provided in the course of the longitudinal hole, as well as having a guide sleeve (5) which is arranged in the retaining space, and having a hole profile of the longitudinal hole, which profile is reduced in a stepped manner at both ends of the retaining space, below the external diameter of the guide sleeve (5), a section (12) of the longitudinal hole (2) which tapers conically towards the retaining space (4) being provided at least at one end (11) of the retaining device (3), the diameter of which longitudinal hole (2) is greater at the sleeve end (11) than the external diameter (9) of the guide sleeve (5) and which, at its other end, has a diameter which corresponds to the hole profile (7) which is reduced in a stepped manner, characterised in that the retaining device is formed by an integral retaining sleeve (3) which projects beyond the guide sleeve (5) at both ends, and in that the retaining sleeve (3) is constructed such that it can be expanded elastically at the said at least one end (11) by means of longitudinal slots (13) which extend into the retaining space (4).

## Revendications

1. Manchon de couplage pour des connecteurs de guides d'ondes lumineuses, ayant un dispositif récepteur de forme tubulaire, qui comporte un alésage longitudinal et une chambre cylindrique de réception, prévue le long de l'alésage longitudinal, ainsi qu'une douille de guidage (5) disposée dans la chambre de réception, le profil de l'alésage longitudinal étant réduit d'une manière échelonnée, aux deux extrémités de la chambre de réception, à une valeur inférieure au diamètre extérieur de la douille de guidage (5), une partie (12) de l'allésage longitudinal (2), qui se rétrécit coniquement en direction de la chambre de réception (4), dont le diamètre à l'extrémité (11) de la douille est supérieur au diamètre extérieur (9) de la douille de guidage (5) et qui a, à son autre extrémité, un diamètre qui coïncide avec celui du profil (7) de l'alésage, réduit de façon étagée, étant prévue au moins à une extrémité (11) du dispositif récepteur (3), caractérisé par le fait que le dispositif récepteur est formé par une douille réceptrice (3) d'un seul tenant, qui fait saillie par ses deux extrémités, au-delà de la douille de guidage (5), et que la douille réceptrice (3) est constituée de manière à pouvoir être élargie élastiquement à ladite au moins une extrémité (11), par des fentes (13) longitudinales, qui vont jusque dans la chambre de réception (4).
